# EUROPEAN PATENT APPLICATION

(11) **EP 4 400 894 A1**
(43) Date of publication of application: **17.07.2024**
(21) Application number: 23151263.3
(22) Date of filing: 12.01.2023
(51) Int. Cl.: G02B 21/36, G02B 21/06

(54) **CONSTRUCTION OF DIGITAL EXTENDED FOCUS IMAGES**

(71) Applicant: CellaVision AB, 223 62 Lund (SE)
(72) Inventor: Almers, Martin, 226 51 LUND (SE); Hedlund, Sven, 226 57 LUND (SE); Jönsson, Jesper, 224 80 LUND (SE)
(74) Representative: AWA Sweden AB

(57) **Abstract**

The present inventive concept relates to digital extended focus images. Disclosed is a method (30) for training a machine learning model to construct a digital extended focus image depicting a sample. The method comprising: acquiring (S300), using at least one microscope objective, a training set of digital images of a training sample by: illuminating (S302), using an illumination system, the training sample with a plurality of illumination patterns, and capturing (S304), for each illumination pattern of the plurality of illumination patterns, a digital image of the training sample; acquiring (S306), using the at least one microscope objective, a digital extended focus image of the training sample; forming (S308) a ground truth comprising the digital extended focus image depicting the training sample; and training (S310) the machine learning model to construct the digital extended focus image depicting a sample using the training set of digital images and the ground truth.

## Description

### Technical field

The present inventive concept relates to construction of an extended focus image, EFI, depicting a sample.

### Background of the invention

Microscopy is a commonly used technique with applications within a wide range of applications. It is common in sample analysis, fabrication and control of miniscule structures (e.g., electronic circuit boards), etc. For instance, it is common to study miniscule objects and/or features in a sample in order to classify a sample. This could, for example, be to determine whether the sample is infected or not.

However, as objects becomes smaller, a larger magnification of the microscope objective is needed. This has the drawback that the depth of field, DOF, of the microscope objective, i.e., the range of distances from the microscope objective at which the imaged object is in acceptably sharp focus, becomes smaller. For thin samples (i.e., relative to the DOF), this is not necessarily a problem, since the sample thickness may be small enough such that the entire sample appears in focus in the captured image. However, for a smaller DOF, the requirements of the precision needed when positioning the sample relative to the microscope objective becomes higher. It may, for instance, be difficult and time-consuming to position the thin sample such that it is in focus. Another drawback may be that more expensive components of the microscope are needed, as meeting the precision requirements may require high-precision translation stages used for the positioning of the sample relative to the microscope objective.

For thick samples (thick relative to the DOF), however, the microscope objective may be unable to image the entire sample in focus. Hence, different layers of a sample may be in focus depending on the position of the imaged sample relative to the microscope objective. This means that, for the entire sample to be imaged, the microscope objective must typically be moved to several positions relative to the sample. This, again, may lead to the required precision when positioning the sample relative to the microscope objective becomes high. Hence, for thick samples, these issues may result in that the time associated with imaging the samples is increased as well as requiring more expensive components (such as high-precision translation stages, etc.).

Thus, there exists a need for improvements within the art.

### Summary of the invention

It is an object to, at least partly, mitigate, alleviate or eliminate one or more of the above-identified deficiencies in the art and disadvantages singly or in any combination and solve at least the above-mentioned problem.

According to a first aspect a method for training a machine learning model to construct a digital extended focus image depicting a sample is provided. The method comprising: acquiring, using at least one microscope objective, a training set of digital images of a training sample by: illuminating, using an illumination system, the training sample with a plurality of illumination patterns, and capturing, for each illumination pattern of the plurality of illumination patterns, a digital image of the training sample; acquiring, using the at least one microscope objective, a digital extended focus image of the training sample; forming a ground truth comprising the digital extended focus image depicting the training sample; and training the machine learning model to construct the digital extended focus image depicting a sample using the training set of digital images and the ground truth.

Within the context of this disclosure, the wording "digital extended focus image" should be construed as a digital image having an enlarged depth of field compared to a microscope objective used to capture that digital image. For instance, a digital extended focus image may depict features of an object in focus, while the features of the object span a larger interval than what the microscope objective is capable of imaging in focus. Hence, in this context, the digital extended focus image of the ground truth has a depth of field larger than what the at least one microscope objective used to capture the training set is capable of imaging in focus.

Within the context of this disclosure, the wording "training" as in "training sample" should be construed as a sample used during training of the machine learning model, as opposed to a general sample which the trained machine learning model is capable of constructing a digital extended focus image of. The constructed extended focus digital image may then depict the general sample in focus. The machine learning model may, of course, be able to construct a digital extended focus image depicting the training sample. The machine learning model may also be able to construct digital extended focus images of other samples as well, which may not be part of the training set of digital images. Put differently, the machine learning model may, after training, be able to construct digital extended focus images of samples not used for training the machine learning model. Simply "the sample" may be used herein to refer to either the samples used during training or the samples input into the trained machine learning model, depending on the context.

Within the context of this disclosure, the wording "illumination patterns" may be construed as different ways of illuminating the sample using the illumination system. Each illumination pattern may, e.g., be formed by simultaneously illuminating the sample from one or more directions of a plurality of directions, and/or by varying the number of light sources of illumination system that emit light.

Within the context of this disclosure, the wording "ground truth" should be construed as information that is known to be real and/or true. Hence, in this context, since the machine learning model is trained to construct a digital extended focus image using the ground truth and the training set of digital images, the ground truth may represent a digital extended focus image of the training sample. Such digital extended focus image of the training sample may be acquired or captured using conventional techniques. For instance, the digital extended focus image of the ground truth may be acquired using focus stacking, which may also be known as focal plane merging, z-stacking, or focus blending. In short, focus stacking is a process in which multiple source images taken at different focus distances relative to an object (e.g., the training sample) are combined to a single digital image, where the resulting single digital image has a greater depth of field than any of the individual source images. Alternatively, the digital extended focus image of the ground truth may be captured using a microscope objective having a depth of field which is larger than a thickness of the training sample. A digital image captured using such microscope object may depict the entire thickness of the training sample in focus, and may thereby be used as the digital extended focus image of the ground truth.

The machine learning model may be trained to correlate the training set of digital images to the ground truth (e.g., the digital extended focus image of the training sample). The machine learning model may be trained iteratively and/or recursively until a difference between an output of the machine learning model (i.e., the constructed digital extended focus image) and the ground truth (i.e., the digital extended focus image of the training sample) is smaller than a predetermined threshold. A smaller difference between the output of the machine learning model and the ground truth may indicate a higher accuracy of the constructed digital extended focus image provided by the machine learning model. Put differently, a smaller difference between the output of the machine learning model and the ground truth may indicate that the constructed digital extended focus image may to a higher degree replicate a digital extended focus image of the training sample. Hence, preferably, the difference between the output of the machine learning model and the ground truth may be minimized. The machine learning model may be trained to construct digital extended focus images of samples for a plurality of different sample types. In such case, the machine learning model may, for each sample type, be trained using a training set of digital images of a training sample of the sample type, and a corresponding ground truth associated with the respective sample type.

By illuminating the training sample with a plurality of illumination patterns and capturing a digital image for each of the plurality of illumination patterns, phase information (typically referred to as quantitative phase within the art) associated with the training sample can be determined. This can be understood as different portions of Fourier space (i.e., the spatial frequency domain) associated with the training sample are imaged for different illumination directions. This technique may be known in the art as Fourier Ptychographic Microscopy, FPM. The phase information may, in turn, be used to replicate the training sample at different focus positions (i.e., positions of the training sample relative to the at least one microscope objective). For instance, even though the training set of digital images is acquired when the training sample is not in focus (i.e., positioned outside a range of positions between a near limit and a far limit of the depth of field of the at least one microscope objective) or only a layer of the training sample is in focus (i.e., positioned inside a range of positions between a near limit and a far limit of the depth of field of the at least one microscope objective), the training set of digital images comprises phase information that may be used to construct a digital extended focus image depicting the training sample. This, since the training sample is illuminated with the plurality of illumination patterns when the training set is acquired. Further, information regarding a refractive index (or a spatial distribution of a refractive index) associated with the training sample may be captured. This can be understood as an effect of refraction of light being dependent on an angle of incident for light illuminating the sample and the refractive index of the training sample. Furthermore, by illuminating the training sample with a plurality of illumination patterns and capturing a digital image for each illumination pattern of the plurality of illumination patterns, information regarding finer details of the training sample may be captured than what normally is resolvable by a conventional microscope (i.e., using a conventional microscope illumination such as a bright-field illumination) used to image the training sample.

Hence, since the training set of digital images comprises information associated with one or more of fine details of the training sample, a refractive index associated with the training sample, and phase information associated with the training sample, this information may be used in the training of the machine learning model, which may, in turn, allow for a machine learning model being trained to more accurately construct the digital extended focus image depicting the training sample than what would be allowed in case the training set of digital images was captured using a single illumination pattern (e.g., conventional bright-field illumination, conventional dark-field illumination, or from a single direction) or by using conventional microscopy. Using conventional microscopy, it may be difficult, or even impossible, to capture information associated with the refractive index associated with the training sample and/or phase information associated with the training sample. Put differently, since a digital image captured using conventional microscopy may simultaneously contain information regarding the refraction of light impinging from directions corresponding to overlapping portions of the Fourier space associated with the training sample, it may be impossible using such techniques to determine phase information associated with the training sample and/or information related to the refractive index of the training sample. Put differently, it may not be possible to determine such information related to the training sample using conventional microscopy. Illuminating the training sample with a plurality of illumination patterns may further allow for capturing information relating to details of the sample which are finer than what normally (using conventional microscopy illumination) is allowed by a microscope objective used to capture the digital images of the training sample. Thus, a microscope objective having a relatively lower magnification may be used while still being able to capture information related to such fine details of the training sample. Using a relatively lower magnification microscope objective may, in turn, allow for digital images of larger portions of the training sample to be captured at each imaging position. Further, a relatively lower magnification microscope objective may, typically, have a larger depth of field, which, in turn, may allow for capturing information associated with a thicker layer of the training sample in each digital image. Hence, the entire training sample (e.g., area and/or thickness) may be scanned by capturing digital images at relatively fewer positions which, in turn, may allow for a faster and/or more efficient scanning of the training sample. Furthermore, the larger depth of field of a relatively lower magnification microscope objective may allow for training the machine learning model to construct a digital extended focus image having an even larger depth of field. This, since the training set of digital images may comprise information pertaining to a thicker layer of the training sample.

Further, this additional information associated with the training sample used during training allows for the trained machine learning model to construct the digital extended focus image depicting a sample, without requiring a meticulous and time-consuming process of capturing a stack of digital images (typically referred to as a z-stack within the art) which requires that the sample is positioned relative to the at least one microscope objective at several focus positions such that all (or a majority of) layers of the sample is imaged in focus.

The at least one microscope objective may comprise a first microscope objective and a second microscope objective, wherein the second microscope objective may have a higher numerical aperture than the first microscope objective. The training set of digital images may be acquired using the first microscope objective and the digital extended focus image of the ground truth may be acquired using the second microscope objective, whereby a resolution of the digital extended focus image of the ground truth may be higher than a resolution of a digital image of the training set of digital images.

An associated advantage is that the machine learning model may be trained to construct a digital extended focus image having a higher resolution than what the first microscope objective is capable of when using conventional microscopy illumination (e.g., bright-field illumination). Hence, the trained machine learning model may be able construct a digital extended focus image replicating a sample and having a relatively high resolution using a plurality of digital images of the sample having a relatively low resolution. Hence, by using the trained machine learning model, a digital extended focus image depicting a sample at a relatively high magnification may be constructed without having to use a microscope objective having a relatively high magnification.

Acquiring the digital extended focus image of the ground truth may comprise: positioning the at least one microscope objective at a plurality of focus positions relative to the training sample, wherein at each focus position, a corresponding layer of the training sample may be between a near limit and a far limit of a depth of field of the at least one microscope objective; and capturing, for each focus position of the plurality of focus positions, a digital image of the training sample, thereby forming a stack of digital images; and combining in-focus parts of each digital image of the stack of digital images, thereby forming the digital extended focus image of the ground truth.

The plurality of focus positions may correspond to a plurality of layers in the training sample extending over a thickness of the training sample.

An associated advantage is that an entire thickness of the training sample may be depicted in the digital extended focus image of the ground truth. This, in turn, may allow the trained machine learning model to construct the digital extended focus image depicting a sample which is a more accurate representation of the sample.

Acquiring the training set of digital images may further comprise: positioning the training sample at a focus position relative to the at least one microscope objective, such that a layer of the training sample is in focus, wherein the layer may have a thickness smaller than a thickness of the training sample.

Within the context of this disclosure, the wording "a layer of the training sample being in focus" should be construed as a layer of the training sample being within a depth of field of the at least one microscope objective used to capture the training set of digital images. For example, the layer of the training sample may be between a near limit and a far limit of the depth of field of the first microscope objective.

An associated advantage is that the trained machine learning model may be able to construct a digital extended focus image of a sample even if the sample already, at least to some extent, is in focus. Thus, the proposed method may allow any focus position to be used for constructing a digital extended focus image of a sample.

The illumination system may comprise a plurality of light sources, each light source of the plurality of light sources may be configured to illuminate the sample from one direction of a plurality of directions; and wherein each illumination pattern of the plurality of illumination patterns may be formed by one or more light sources of the plurality of light sources.

An associated advantage is that the illumination system may be able to switch between different illumination patterns quicker and/or more reliably compared to an illumination system comprising a single, movable light source capable of illuminating a position from different directions.

At least one direction of the plurality of directions may correspond to an angle larger than a numerical aperture of the at least one microscope objective used to acquire the training set of digital images.

Within the context of this disclosure, the wording "numerical aperture of the microscope objective" should be construed as a dimensionless number associated with a range of angles over which the microscope objective accepts light. Hence, a direction corresponding to an angle larger than the numerical aperture of the at least one microscope objective may be a direction corresponding to an angle outside of (e.g., larger than) the range of angles over which the at least one microscope objective accepts light.

By illuminating the training sample from a direction corresponding to an angle larger than the numerical aperture of the at least one microscope objective, the digital image captured for that angle of illumination may comprise information about higher spatial frequencies of the training sample, and thereby finer details of the training sample, than the at least one microscope objective normally allows (i.e., using conventional microscopy illumination). This may, in turn, allow the at least one microscope objective to capture phase information associated with the training sample and/or information relating to details of the training sample not normally being resolvable by the at least one microscope objective, which may be used in the training of the machine learning model. Put differently, illuminating the training sample from a direction corresponding to an angle larger than the numerical aperture of the at least one microscope objective may allow for an improved machine learning model capable of constructing a digital extended focus image depicting a sample.

According to a second aspect a method for constructing a digital extended focus image depicting a sample is provided. The method comprising: acquiring, using a microscope objective, an input set of digital images of the sample by: illuminating, using an illumination system, the sample with a plurality of illumination patterns, and capturing, for each illumination pattern of the plurality of illumination patterns, a digital image of the sample; and constructing the digital extended focus image depicting the sample by: inputting the input set of digital images into a machine learning model being trained according to the method of the first aspect, and receiving, from the machine learning model, an output comprising the constructed digital extended focus image depicting the sample.

The plurality of illumination patterns used to acquire the input set of digital images may be formed in the same manner as the plurality of illumination patterns used to acquire the training set of digital images used to train the machine learning model. For example, the illumination patterns may have the same directions, same LED positions, same intensities, same colors, etc.

By inputting the input set of digital images into a machine learning model trained according to the method of the first aspect, the process of imaging the sample in focus may be more efficient, since a digital extended focus image can be output from the trained machine learning model using digital images of the sample which may be captured when only a layer of the sample (e.g., a layer thinner than an overall thickness of the sample) is in focus or when the sample is entirely out of focus. In other words, the method according to the second aspect allows for positioning the sample at a focus position outside or inside the depth of field of the microscope objective to be used, while the trained machine learning model may still construct a digital extended focus image depicting the sample. It is further to be understood that the method according to the second aspect may allow positioning the sample such that a first portion of the sample is in inside the depth of field and a second portion of the sample is outside the depth of field when the input set of digital images is captured, while the trained machine learning model is capable of constructing a digital extended focus image depicting that sample. For instance, the sample may be tilted compared to the microscope objective, i.e., some portions of the sample is in focus while other portions of the sample are not in focus. Thus, a time-consuming process of adjusting a focus position (i.e., a position along an optical axis of the microscope objective) of the sample relative the microscope objective in order to focus the sample may be avoided.

The illumination system of the second aspect may comprise a plurality of light sources, each light source of the plurality of light sources may be configured to illuminate the sample from one direction of a plurality of directions, and wherein each illumination pattern of the plurality of illumination patterns may be formed by one or more light sources of the plurality of light sources.

At least one direction of the plurality of directions may correspond to an angle larger than a numerical aperture of the microscope objective used to acquire the input set of digital images.

The above-mentioned features and/or advantages of the first aspect, when applicable, apply to the second aspect as well. In order to avoid undue repetition, reference is made to the above.

According to a third aspect a device for training a machine learning model to construct a digital extended focus image depicting a sample is provided. The device comprising: circuitry configured to execute: a first receiving function configured to receive a training set of digital images of a training sample, wherein the training set of digital images is acquired by: illuminating, using an illumination system, the training sample with a plurality of illumination patterns, and capturing, for each illumination pattern of the plurality of illumination patterns, a digital image of the training sample; a second receiving function configured to receive a ground truth comprising a digital extended focus image depicting the training sample; and a training function configured to train the machine learning model to construct the digital extended focus image depicting a sample using the training set of digital images and the ground truth. The device for training the machine learning model may be configured to execute the method according to the first aspect.

The above-mentioned features and/or advantages of the first aspect and/or the second aspect, when applicable, apply to the third aspect as well. In order to avoid undue repetition, reference is made to the above.

According to a fourth aspect a microscope system is provided. The microscope system comprising: an illumination system configured to illuminate a sample with a plurality of illumination patterns; an image sensor configured to capture digital images of the sample; a microscope objective configured to image the sample onto the image sensor; and circuitry configured to execute: an acquisition function configured to acquire an input set of digital images by being configured to: control the illumination system to illuminate the sample with each illumination pattern of the plurality of illumination patterns, and control the image sensor to capture a digital image for each illumination pattern of the plurality of illumination patterns; and wherein the circuitry is further configured to execute: a digital extended focus image construction function configured to: input the input set of digital images into a machine learning model being trained according to the method of the first aspect, and receive, from the machine learning model, an output comprising the constructed digital extended focus image depicting the sample.

The illumination system may comprise a plurality of light sources, each light source of the plurality of light sources may be configured to illuminate the sample from one direction of a plurality of directions, and wherein each illumination pattern of the plurality of illumination patterns may be formed by one or more light sources of the plurality of light sources.

At least one direction of the plurality of directions may correspond to an angle larger than a numerical aperture of the microscope objective used to image the sample.

The plurality of light sources may be arranged on a curved surface being concave along at least one direction along the surface.

Arranging the plurality of light sources on a curved surface may be advantageous in that the distance from each light source to a current imaging position (i.e., a position or portion of the sample currently being imaged) of the microscope system may be similar. Since this distance is similar, an intensity of light emitted from each light source may be similar at the current imaging position. This may be understood as an effect of the inverse square law. Thus, the sample may be illuminated by light having similar intensities from each light source, which may, in turn, allow for a more homogenous illumination of the sample independent of illumination direction. It may be advantageous to configure the illumination system such that the distance from each light source to the current imaging position is large enough such that each light source may be treated as a point source. The distance from each light source to the current imaging position may be chosen such that an intensity of light from each light source at the current imaging position is high enough to produce the input set of digital images.

The curved surface may be formed of facets. Put differently, the curved surface may be constructed by a plurality of flat surfaces. Thus, the curved surface may be a piecewise flat surface.

An associated advantage is that the illumination system may be easier to manufacture, thereby reducing associated economic costs.

A further associated advantage is that the illumination system may be modular. It may thereby be easier to replace one or more light sources (e.g., in case they break and/or are defective).

The above-mentioned features and/or advantages of the first aspect, the second aspect, and/or the third aspect, when applicable, apply to the fourth aspect as well. In order to avoid undue repetition, reference is made to the above.

A further scope of applicability of the present disclosure will become apparent from the detailed description given below. However, it should be understood that the detailed description and specific examples, while indicating preferred variants of the present inventive concept, are given by way of illustration only, since various changes and modifications within the scope of the inventive concept will become apparent to those skilled in the art from this detailed description.

Hence, it is to be understood that this inventive concept is not limited to the particular steps of the methods described or component parts of the systems described as such method and system may vary. It is also to be understood that the terminology used herein is for purpose of describing particular embodiments only and is not intended to be limiting. It must be noted that, as used in the specification and the appended claims, the articles "a", "an", "the", and "said" are intended to mean that there are one or more of the elements unless the context clearly dictates otherwise. Thus, for example, reference to "a unit" or "the unit" may include several units, and the like. Furthermore, the words "comprising", "including", "containing" and similar wordings do not exclude other elements or steps.

### Brief description of the drawings

The above and other aspects of the present inventive concept will now be described in more detail, with reference to appended drawings showing variants of the inventive concept. The figures should not be considered limiting the inventive concept to the specific variant; instead they are used for explaining and understanding the inventive concept. As illustrated in the figures, the sizes of layers and regions are exaggerated for illustrative purposes and, thus, are provided to illustrate the general structures of variants of the present inventive concept. Like reference numerals refer to like elements throughout.
Figure 1 is a schematic illustration of a device for training a machine learning model to construct a digital extended focus image depicting a sample.
Figure 2 is a schematic illustration of a microscope system.
Figure 3 is a box scheme of a method for training a machine learning model to construct a digital extended focus image depicting a sample.
Figure 4 is a box scheme of a method for constructing a digital extended focus image depicting a sample.
Figure 5 is a schematic illustration of an illumination system having a curved surface formed by facets.

### Detailed description

The present inventive concept will now be described more fully hereinafter with reference to the accompanying drawings, in which currently preferred variants of the inventive concept are shown. This inventive concept may, however, be implemented in many different forms and should not be construed as limited to the variants set forth herein; rather, these variants are provided for thoroughness and completeness, and fully convey the scope of the present inventive concept to the skilled person.

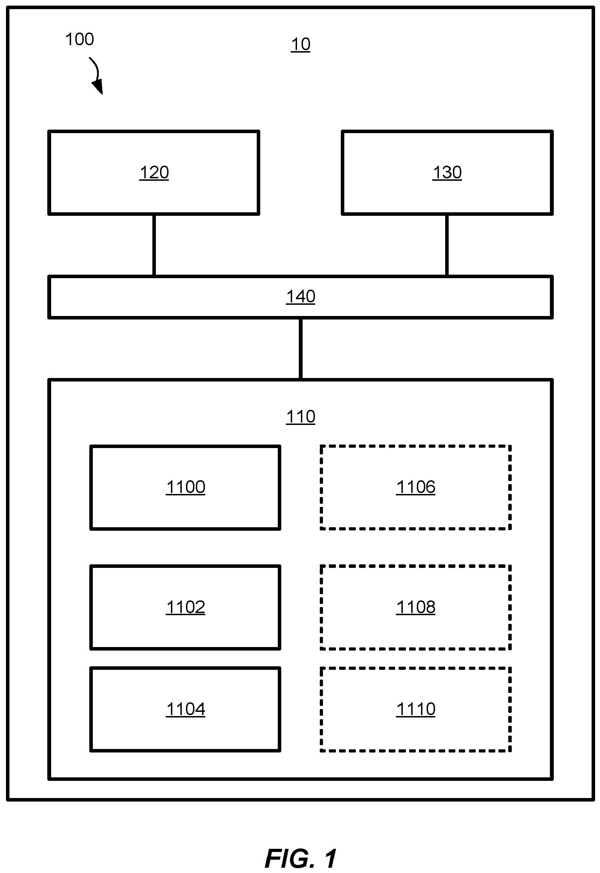

A device 10 for training a machine learning model to construct a digital image depicting a focused sample will now be described with reference to Fig. 1. Figure 1 is a schematic illustration of an example of a device 10 for training a machine learning model to construct a digital extended focus image depicting a sample. Hence, it should be noted that sizes, shapes and positions of the different elements in the figure are not limiting in any way, but rather merely for illustrative purposes. The constructed digital extended focus image depicting the sample may be similar to a digital image of the sample captured using a microscope objective having a large depth of field (i.e., large compared to a thickness of the sample). For instance, the depth of field of such microscope objective may be larger than a thickness of the sample. Hence, the constructed digital extended focus image may be similar to a digital imaging depicting the sample in focus over the entire thickness of the sample. Alternatively, the depth of field of the constructed digital extended focus image may correspond to a portion (i.e., one or more layers) of the training sample. Put differently, one or more layers of the training sample, or the entire thickness of the training sample, may appear in focus in the constructed digital extended focus image. The constructed digital extended focus image may depict one or more features of the sample in focus. The one or more features may be distributed over of one or more layers in the sample. The one or more layers in the sample may be distributed along an optical axis of an imaging system used to image the sample (e.g., the at least one microscope objective described below).

The device 10 illustrated in Fig. 1 may be a computing device. Examples of suitable computing devices comprise computers, servers, smartphones, tablets, etc. The device 10 may further be implemented as part of a cloud server and/or a distributed computing arrangement. It is further to be understood that the device 10 may comprise further components, for example input devices (mouse, keyboard, touchscreen, etc.) and/or a display. The device 10 may further comprise a power source, for example a connection to electrical power, a battery, etc. The device 10 comprises circuitry 100. As is illustrated in the example of Fig. 1, the circuitry 100 may comprise one or more of a memory 110, a processing unit 120, a transceiver 130, and a data bus 140. The memory 110, the processing unit 120, and the transceiver 130 may be configured to communicate via the data bus 140. Accompanying control lines and/or address busses between two or more of the memory 110, the processing unit 120 and the transceiver 130 may also be present.

The processing unit 120 may, e.g., comprise one or more of a central processing unit (CPU), a graphical processing unit (GPU), a microcontroller, and a microprocessor. The processing unit 120 may be configured to execute program code stored in the memory 110, in order to carry out functions and operations of the device 10.

The transceiver 130 may be configured to communicate with external devices. The transceiver 130 may transmit data from and receive data to the device 10. For example, the transceiver 130 may be configured to communicate with servers, computer external peripherals (e.g., external storage), etc. The external devices may be local devices or remote devices (e.g., a cloud server). The transceiver 130 may be configured to communicate with the external devices via an external network (e.g., a local-area network, the internet, etc.). The transceiver 130 may be configured for wireless and/or wired communication. Suitable technologies for wireless communication are known to the skilled person. Some non-limiting examples comprise Wi-Fi, Bluetooth, and Near-Field Communication (NFC). Suitable technologies for wired communication are known to the skilled person. Some non-limiting examples comprise USB, Ethernet, and Firewire.

The memory 110 may be a non-transitory computer-readable storage medium. The memory 110 may comprise one or more of a buffer, a flash memory, a hard drive, a removable media, a volatile memory, a non-volatile memory, a random-access memory (RAM), and another suitable device. In a typical arrangement, the memory 110 may include a non-volatile memory for long term data storage and a volatile memory that functions as system memory for the device 10. The memory 110 may exchange data within the circuitry 100 over the data bus 140.

As is illustrated in the example of Fig. 1, the memory 110 may store program code portions 1100, 1102, 1104, 1106, 1108, 1110 corresponding to one or more functions. The program code portions 1100, 1102, 1104, 1106, 1108, 1110 may be executable by the processing unit 120, which thereby performs the functions. Hence, when it is referred to that the circuitry 100 is configured to execute a specific function, the processing unit 120 may execute program code portions corresponding to the specific function which may be stored on the memory 110. However, it is to be understood that one or more functions of the circuitry 100 may be hardware implemented and/or implemented in a specific integrated circuit. For example, one or more functions may be implemented using field-programmable gate arrays (FPGAs). Put differently, one or more functions of the circuitry 100 may be implemented in hardware or software, or as a combination of the two.

The circuitry 100 is configured to execute a first receiving function 1100, a second receiving function 1102, and a training function 1104. The circuitry 100 may be configured to execute additional functions. For instance, the circuitry 100 may be configured to execute one or more of an instructing function 1106, a first combination function 1108, and a second combination function 1110, all of which will be described below.

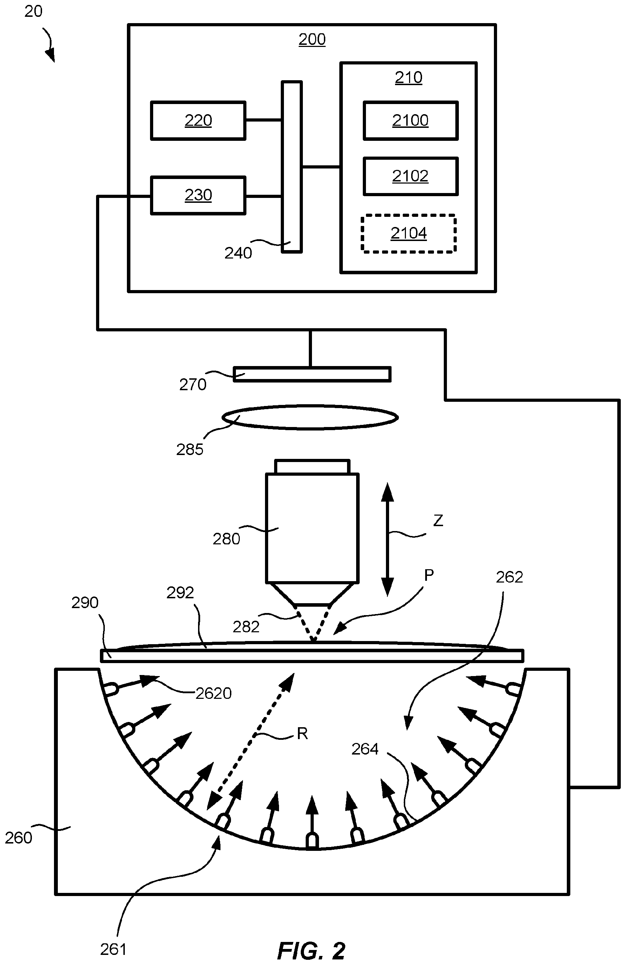

The first receiving function 1100 is configured to receive a training set of digital images of a training sample. The training set of digital images is acquired, using at least one microscope objective, and by illuminating, using an illumination system, the training sample with a plurality of illumination patterns, and capturing, for each illumination pattern of the plurality of illumination patterns, a digital image of the training sample. Each illumination pattern may be formed by simultaneously illuminating the training sample from one or more directions. Each illumination pattern may be formed by simultaneously illuminating the training sample from one or more directions. Each illumination pattern may be formed by simultaneously illuminating the training sample from one or more directions corresponding to non-overlapping portions in a Fourier space associated with the training sample. Each illumination pattern may be formed by illuminating the training sample from only one direction. At least two illumination directions of two different illumination patterns of the plurality of illumination patterns may correspond to overlapping portions of the Fourier space associated with the training sample. The first receiving function 1100 may be configured to receive the training set of digital images via the transceiver 130. For example, the training set of digital images may be captured using an external microscope system and received by the circuitry 100 via the transceiver 130. As a further example, the device 10 may form part of a microscope system (e.g., a microscope system similar to that of Fig. 2) and the training set of digital images may be received from an image sensor of that microscope system. The circuitry 100 may be configured to execute an instructing function 1106 configured to transmit instructions (e.g., via the transceiver 130), to the microscope system on how to capture the training set of digital images. As a yet further example, the training set of digital images may be stored on a storage device (e.g., an external or internal storage device) and received from that storage device. The memory 110 may be configured to store the training set of digital images, and the first receiving function 1100 may be configured to receive the training set of digital images from the memory 110.

Acquiring the training set of digital images may further comprise: positioning the training sample at a focus position relative to the at least one microscope objective, such that a layer of the training sample is in focus, wherein the layer may have a thickness smaller than a thickness of the training sample. Here, "a layer of the training sample being in focus" may be a layer of the training sample being within a depth of field of the at least one microscope objective used to capture the training set of digital images. The focus position may be a position along an optical axis of the at least one microscope objective used to capture the training set of digital images.

The illumination system may comprise a plurality of light sources. Each light source of the plurality of light sources may be configured to illuminate the sample from one direction of a plurality of directions. Each illumination pattern of the plurality of illumination patterns may be formed by one or more light sources of the plurality of light sources. In other words, each light source may illuminate the training sample from a different (or unique) direction. The different illumination patterns of the plurality of illumination patterns may be formed by illuminating the training sample with at least one light source of the plurality of light sources. In other words, each illumination pattern of the plurality of illumination patterns may be formed by illuminating the sample from at least one direction of the plurality of directions. Thus, the training sample may be illuminated by a single light source of the plurality of light sources (or from a single direction of the plurality of direction). Alternatively, the training sample may be illuminated by several light sources of the plurality of light sources (or from several directions of the plurality of directions) at the same time. In such case, the directions used to form a single illumination pattern may correspond to non-overlapping portions of a Fourier space associated with the training sample. The light sources may be white light-emitting diodes, LEDs. By using white LEDs, the training set of digital images may comprise information of the training sample associated with a relatively broad range of wavelengths, especially in comparison when using narrowband light (e.g., lasers, single-color LEDs, etc.). This may, in turn, allow the machine learning model to be trained to construct a digital extended focus image depicting a sample in color.

At least one direction of the plurality of directions may correspond to an angle larger than a numerical aperture of the at least one microscope objective used to acquire the training set of digital images. Since the training sample may be illuminated from a plurality of different directions and a digital image may be captured for each of the plurality of directions, additional information regarding the training sample may be captured than what normally may be allowed using conventional microscope illumination (e.g., bright-field illumination). For example, by illuminating the sample from the plurality of directions, a microscope objective having a numerical aperture of 0.4 may capture information relating to fine details to the same extent that a microscope objective being used in conventional microscopy (e.g., using bright-field illumination) and having a numerical aperture of 1.25. Put differently, by illuminating the training sample from the plurality of directions, a microscope objective having a magnification of 20 times may capture information relating to fine details to the same extent that a microscope objective being used in conventional microscopy (e.g., using bright-field illumination) and having a magnification of 100 times. This can be understood as information of different portions of Fourier space (i.e., the spatial frequency domain) associated with the training sample are captured for different illumination directions. This technique may be known in the art as Fourier ptychography. Generally in Fourier ptychography, high spatial frequencies in Fourier space associated with a sample are sampled when that sample is illuminated from a direction corresponding to a large angle of incidence. Hence, in case the sample is illuminated from a direction corresponding to an angle larger than the numerical aperture of the at least one microscope objective, even higher spatial frequencies of the Fourier space may be sampled. This is possible since the light is scattered by the sample, and a portion of the light scattered by the sample may be collected by the at least one microscope objective. This illumination technique may further allow information regarding a refractive index (or a spatial distribution of the refractive index) associated with the training sample to be captured by the at least one microscope objective (e.g., the first microscope objective). This can be understood as an effect of refraction of light being dependent on an angle of incident for light illuminating the training sample and the refractive index of the training sample. Further, phase information (typically referred to as quantitative phase within the art) associated with the training sample may be determined using this imaging technique. Since the training set of digital images comprises information associated with one or more of fine details of the training sample, a refractive index associated with the training sample, and phase information associated with the training sample, this information may be used in the training of the machine learning model, which may, in turn, allow for a machine learning model being trained to more accurately construct the digital extended focus image depicting a sample than what would be allowed in case the plurality of digital images were captured from only one direction or using only conventional microscopy illumination. Put differently, it may allow for a machine learning model being trained to construct the digital extended focus image depicting the sample more accurately than what would be allowed in case the plurality of digital images was captured from only one direction or using a conventional microscope (e.g., using bright-field illumination). It is to be understood that the information relating to one or more of finer details of the training sample, refractive index associated with the training sample, and phase information associated with the training sample may be captured by illuminating the sample from more than one direction of the plurality of different directions at a time, for example from a subset of the plurality of directions. The subset of the plurality of directions may comprise directions corresponding to non-overlapping portions of the Fourier space associated with the training sample. It is further to be understood that the above magnifications and numerical apertures are examples only, and the present invention may be implemented for other magnifications and/or numerical apertures as well. A microscope system suitable for acquiring the training set of digital images will be described in connection with Fig. 2.

The second receiving function 1102 is configured to receive a ground truth comprising a digital extended focus image depicting the training sample. The digital extended focus image of the ground truth is acquired using the at least one microscope objective. The digital extended focus image of the ground truth may have a larger depth of field than a digital image of the training set of digital images. A resolution of the digital extended focus image of the ground truth may be relatively higher than a resolution of at least one digital image of the training set of digital images. For instance, the at least one microscope objective may comprise a first microscope objective and a second microscope objective. The second microscope objective may have a higher numerical aperture than the first microscope objective. As a non-limiting example, the numerical aperture of the first microscope objective may be 0.4 (i.e., corresponding to a magnification of 20 times), and the numerical aperture of the second microscope objective may be 1.25 (i.e., corresponding to a magnification of 100 times). The training set of digital images may be acquired using the first microscope objective and the digital extended focus image of the ground truth may be acquired using the second microscope objective, whereby a resolution of the digital extended focus image of the ground truth may be higher than a resolution of a digital image of the training set of digital images. The resolution of the digital extended focus image of the ground truth may be higher than a resolution of a majority (or all) of the digital images of the training set of digital images. Preferably, the first microscope objective used to capture the training set of digital images may have a relatively low resolution and thus a relatively large field of view (compared to the digital extended focus image of the ground truth). The training sample may be positioned at a plurality of transverse positions relative to the second microscope objective. The digital extended focus image of the ground truth may be formed by combining digital images captured at the plurality of transverse positions. Thereby, the digital extended focus image may depict a portion of the training sample which the first microscope objective is capable of imaging. Put differently, the digital extended focus image of the ground truth and the training set of digital images may comprise information from similar portions of the training sample. The circuitry 100 may be configured to execute a first combination function 1108 configured to combine the digital images captured at the different transverse positions into the digital extended focus image of the ground truth in accordance with the above.

The ground truth may be information that is known to be real and/or true. In this context, since the machine learning model is trained to construct a digital extended focus image depicting a sample, the ground truth may represent a "correct" representation of a digital extended focus image depicting the training sample. For example, the ground truth may comprise a digital extended focus image of the training sample captured by means of a different imaging technique. For instance, the digital extended focus image of the ground truth may be captured using a microscope objective having a large depth of field (i.e., large compared to the thickness of the training sample). A digital image captured using such microscope object may depict the sample in focus over the entire thickness of the sample. Alternatively, the digital extended focus image of the ground truth may be acquired by positioning the at least one microscope objective at a plurality of focus positions relative to the training sample. At each focus position, a corresponding layer of the training sample may be between a near limit and a far limit of a depth of field of the at least one microscope objective. Put differently, at each focus position, a corresponding layer of the training sample may be in focus. For each focus position of the plurality of focus positions, a digital image of the training sample may be acquired, thereby forming a stack of digital images. In-focus parts of each digital image of the stack of digital images may be combined, and thereby form the digital extended focus image of the ground truth. In other words, the digital extended focus image of the ground truth may be a combination of a plurality of digital images, wherein each digital image of the plurality of digital images is captured at different focus positions of the training sample relative to the at least one microscope objective used to acquire the ground truth (e.g., the second microscope objective). The digital extended focus image of the ground truth may be formed by identifying and combining parts (or features) that appear in focus in each digital image of the plurality of digital images. Different algorithms for combining digital images to form a digital extended focus image are known within the art. Such algorithms would therefore be apparent to the skilled person. The plurality of focus positions may correspond to a plurality of layers in the training sample extending over a thickness of the training sample. The thickness of the training sample may be the thickness of a portion of the sample within a field of view of the first microscope objective. The combination of digital images above may be performed by the circuitry 100. Hence, the circuitry 100 may be configured to execute a second combination function 1110 configured to combine in-focus parts of a plurality of digital images into the digital extended focus image of the ground truth according to the above. It is to be understood that the first combination function 1108 and the second combination function 1110 can be combined to produce the digital extended focus image of the ground truth. Put differently, the digital extended focus image of the ground truth may be a combination of digital images captured at the plurality of focus positions at each transverse position of a plurality of transverse positions. Alternatively, the digital extended focus image may be formed (e.g., by combining in-focus parts of a plurality of digital images of the training sample) and/or stored on a different device (e.g., a computing device), and the device 10 may receive the ground truth may be received via the transceiver 130.

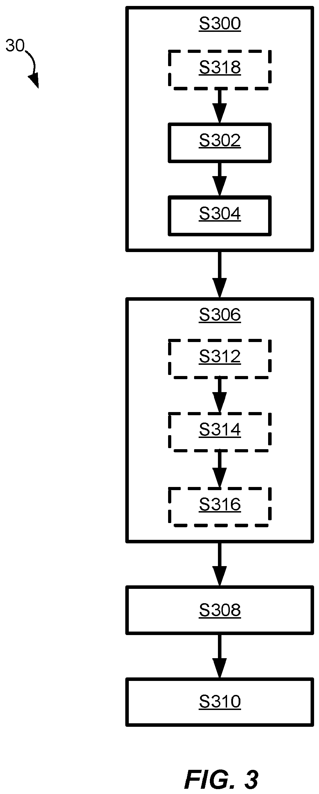

The training function 1104 is configured to train the machine learning model to construct the digital extended focus image depicting a sample using the training set of digital images and the ground truth. In case the digital extended focus image of the ground truth has a higher resolution than a digital image of the training set of digital images, the machine learning model may be trained to construct a digital extended focus image having a higher resolution than what the first microscope objective of the at least one microscope objective is capable of when using conventional microscopy illumination (e.g., bright-field microscopy). The training function 1104 (or the device 10) may thus be configured to perform the method 30 described in connection with Fig. 3. The machine learning model may be a convolutional neural network. The machine learning model may be a convolutional neural network suitable for digital image construction. The training function 1104 may be configured to train the machine learning model iteratively and/or recursively until a difference between an output of the machine learning model (i.e., the constructed digital extended focus image depicting the training sample) and the ground truth (e.g., the digital extended focus image depicting the training sample) is smaller than a predetermined threshold. Hence, the training function 1104 may train the machine learning model to correlate the training set of digital images to the ground truth. A smaller difference between the output of the machine learning model and the ground truth may indicate a higher accuracy of the constructed digital extended focus image depicting the training sample provided by the machine learning model. Hence, preferably, the difference between the output of the machine learning model and the ground truth may be minimized. A skilled person realizes that minimizing functions (e.g., the loss function) may be associated with tolerances. For example, the loss function may be regarded as being minimized even though the minimized loss function has a value which is not a local and/or global minimum. The machine learning model may be trained using a plurality of training sets and a plurality of corresponding ground truths. Put differently, the machine learning model may be trained using a plurality of different samples. This may allow for an improved training of the machine learning model to construct a digital extended focus image depicting a sample. The machine learning model may be trained to construct digital extended focus images of samples for a plurality of different sample types. In such case, the machine learning model may, for each sample type, be trained using a training set of digital images of a training sample of the sample type, and a corresponding ground truth associated with a sample of the respective sample type (e.g., a digital extended focus image of a sample of that sample type). This may allow the trained machine learning model to construct digital extended focus images of different sample types. The trained machine learning model may construct digital extended focus images of samples that were not used during training.

A microscope system 20 for constructing a digital extended focus image depicting a sample will now be described with reference to Fig. 2. Figure 2 is a schematic illustration of an example of a microscope system 20. The microscope system 20 of Fig. 2 may be suitable for acquiring training sets of digital images of training samples to be used when training a machine learning model to construct a digital image depicting a focused sample as described above in connection with the device 10 of Fig. 1 or in connection with the method as described below in connection with Fig. 3. In such case, the instructing function 1106 of the circuitry 100 of the device 10 may instruct the microscope system 20 on how to acquire the digital images of the training set of digital images. Further, the microscope system 20 of Fig. 2 may be suitable to acquire a digital extended focus image of the training sample (i.e. the ground truth) used to train the machine learning model. A skilled person realizes that the circuitry 100 may comprise further instructing function (not illustrated in Fig. 1) which comprises instructions for the microscope system 20 on how to acquire the digital extended focus image of the ground truth. Further, the microscope system 20 of Fig. 2 may be suitable for acquiring an input set of digital images of a sample, to be used by the trained machine learning model to construct a digital extended focus image of the sample as will be further described below.

The microscope system 20 comprises an illumination system 260, a microscope objective 280, an image sensor 270, and circuitry 200. The circuitry 200 is configured to execute an acquisition function 2100, and a digital extended focus image construction function 2102. The circuitry 200 may be further configured to execute a focusing function 2104. These functions will be described further below.

The microscope system 20 may further comprise a sample holder 290 as illustrated in the example of Fig. 2. The microscope system 20 may comprise further components, even though they are not illustrated in Fig. 2 for example input devices (mouse, keyboard, touchscreen, etc.) and/or a display. The circuitry 200 may comprise one or more of a memory 210, a processing unit 220, a transceiver 230, and a data bus 240. The processing unit 220 may comprise a central processing unit (CPU) and/or a graphical processing unit (GPU). The transceiver 230 may be configured to communicate with external devices. For example, the transceiver 230 may be configured to communicate with servers, computer external peripherals (e.g., external storage), etc. The external devices may be local devices or remote devices (e.g., a cloud server). The transceiver 230 may be configured to communicate with the external devices via an external network (e.g., a local-area network, the internet, etc.) The transceiver 230 may be configured for wireless and/or wired communication. Suitable technologies for wireless communication are known to the skilled person. Some non-limiting examples comprise Wi-Fi, Bluetooth and Near-Field Communication (NFC). Suitable technologies for wired communication are known to the skilled person. Some non-limiting examples comprise USB, Ethernet, and Firewire. The memory 210, the processing unit 220, and the transceiver 230 may communicate via the data bus 240. The illumination system 260 and/or the image sensor 270 may be configured to communicate with the circuitry 200 via the transceiver 230 as illustrated in Fig. 2. Additionally, or alternatively, the illumination system 260 and/or the image sensor 270 may be configured to directly (e.g., via a wired connection) communicate with the data bus 240. The memory 210 may be a non-transitory computer-readable storage medium. The memory 210 may comprise one or more of a buffer, a flash memory, a hard drive, a removable media, a volatile memory, a non-volatile memory, a random-access memory (RAM), or another suitable device. In a typical arrangement, the memory may include a non-volatile memory for long term data storage and a volatile memory that functions as system memory for the microscope system 20. The memory 210 may exchange data within the circuitry 200 over the data bus 240. As is illustrated in the example of Fig. 2, the memory 210 may store program code portions 2100, 2102, 2104 corresponding to one or more functions. The program code portions 2100, 2102, 2104 may be executable by the processing unit 220, which thereby performs the functions. Hence, when it is referred to that the circuitry 200 is configured to execute a specific function, the processing unit 220 may execute program code portions corresponding to the specific function which may be stored on the memory 210. However, it is to be understood that one or more functions of the circuitry 200 may be hardware implemented and/or implemented in a specific integrated circuit. For example, one or more functions may be implemented using field-programmable gate arrays (FPGAs). Put differently, one or more functions of the circuitry 200 may be implemented in hardware or software, or as a combination of the two.

Even though the image sensor 270 is illustrated on its own in Fig. 2, it is to be understood that the image sensor 270 may be comprised in a camera (not illustrated in Fig. 2). In the example of Fig. 2, the sample holder 290 is a microscope slide onto which a sample 292 has been applied. It is to be understood that the sample 292 may be covered by a coverslip (not illustrated in Fig. 2). The sample holder 290 may be configured to hold the sample 292 to be analyzed. The sample holder 290 may be movable in a longitudinal direction (i.e., a direction parallel to an optical axis of the microscope objective) and/or in a transverse direction (i.e. a direction perpendicular to the optical axis of the microscope objective), for example by being coupled to manual and/or motorized stages, thereby allowing the sample 292 to be moved such that different portions and/or layers of the sample 292 may be imaged by the microscope objective 280 and the image sensor 270.

The illumination system 260 is configured to illuminate a sample 292 with a plurality of illumination patterns. As is illustrated in Fig. 2, the illumination system 260 may comprise a plurality of light sources 261. The light sources may be configured to illuminate samples with broad spectrum light (i.e. white light). Alternatively, the illumination system may illuminate samples with narrow spectrum light (e.g. single colored light). The light sources 261 may be light emitting diodes (LEDs). The LEDs may be white LEDs or colored LEDs. White LEDs may be formed by e.g. blue LEDs covered in a layer of fluorescent material which when illuminated emits white light. The LEDs may be any type of LED, such as ordinary LED bulbs (i.e. traditional and inorganic LEDs), graphene LEDs, or LEDs typically found in displays (e.g. quantum dot LEDs (QLEDs) or organic LEDs (OLEDs)). However, other types of LED may be used as well. The illumination system 260 may, for example, comprise a plurality of lasers, and the light emitted from each laser of the plurality of lasers may be converted to light with broader spectral bandwidth. An example of such conversion process may be referred to as supercontinuum generation. The light sources may emit incoherent light, quasi-coherent light, or coherent light.

Each illumination pattern of the plurality of illumination patterns may be formed by one or more light sources of the plurality of light sources 261. Put differently, each illumination pattern of the plurality of illumination patterns may be formed by illuminating the sample 292 simultaneously by one or more light sources of the plurality of light sources 261. In its simplest form, an illumination pattern of the plurality of illumination patterns may be formed by illuminating the sample 292 with only one light source of the plurality of light sources 261. Alternatively, or in combination, an illumination pattern of the plurality of illumination patterns may be formed by illuminating the sample 292 simultaneous by a more than one light source of the plurality of light sources 261. The illumination patterns used to acquire the input set of digital images may be similar to (or even identical to) the illumination patterns used to acquire the training set of digital images used to train the machine learning model used to construct a digital extended focus image depicting the sample 292 using the acquired input set of digital images.

Each light source of the plurality of light sources 261 may be configured to illuminate the sample 292 from one direction of a plurality of directions 262. The illumination system 260 may be configured to simultaneously illuminate the sample 292 with one or more light sources of the plurality of light sources 261. Put differently, the illumination system 260 may be configured to simultaneously illuminate the sample 292 from one or more directions of the plurality of directions 262. At least one direction of the plurality of directions 262 may correspond to an angle larger than a numerical aperture of the microscope objective 280 used to image the sample. The numerical aperture of the microscope objective may, in a non-limiting example, be 0.4. For example, direction 2620 in Fig. 2 may correspond to an angle larger than the numerical aperture 282 of the microscope objective 280. Light entering the microscope objective 280 from the direction 2620 without being scattered may not be allowed to propagate through the microscope objective 280 (i.e., the angle of incidence of light from this direction may be outside the numerical aperture 282 of the microscope objective 280) to the image sensor 270. Thus, light from this direction may need to be scattered by the sample 292 to be allowed to propagate through the microscope objective 280 to the image sensor 270.

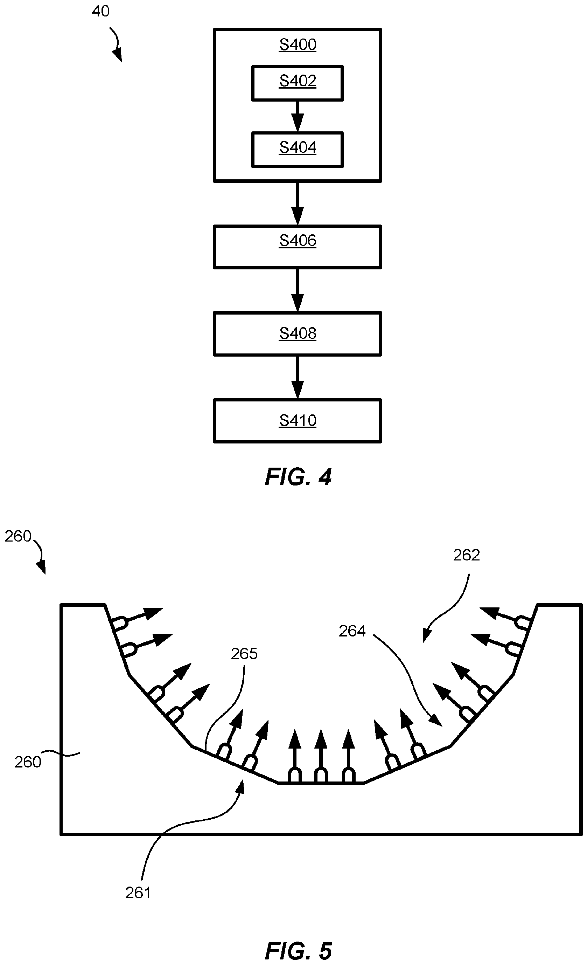

As is illustrated in Fig. 2, the plurality of light sources 261 may be arranged on a curved surface 264. The curved surface 264 may be concave along at least one direction along the surface 264. For example, the curved surface 264 may be a cylindrical surface. The curved surface 264 may be concave along two perpendicular directions along the surface. For example, the curved surface 264 may have a shape similar to a segment of a sphere. A segment of a sphere may be a spherical cap or a spherical dome. Arranging the plurality of light sources 261 on a curved surface 264 may be advantageous in that a distance R from each light source to a current imaging position P of the microscope system 20 may be similar. Since this distance is similar, an intensity of light emitted from each light source may be similar at the current imaging position P. This may be understood as an effect of the inverse square law. Thus, the sample 292 may be illuminated by light having similar intensities for each direction in the plurality of directions 262, which may, in turn, allow for a more homogenous illumination of the sample 292 independent of illumination direction. The distance R from each light source to the current imaging position P may be in a range from 4 cm to 15 cm. It may be advantageous to configure the illumination system 260 such that the distance R from each light source to the current imaging position P is large enough such that each light source may be treated as a point source. Hence, the distance R from each light source to the current imaging position P may be larger than 15 cm, given that an intensity of light from each light source at the current imaging position is high enough to produce the sets of digital images. However, it is to be understood that the plurality of light sources 261 may be arranged on a flat surface or on a surface having an irregular shape. It is further to be understood that Fig. 2 illustrates a cross section of the microscope system 20, and in particular the illumination system 260. Hence, the curved surface 264 of the illumination system 260 illustrated in Fig. 2 may be a cylindrical surface or a portion of a spherical surface (or of a quasi-spherical surface). The curved surface 264 of the illumination system 260 may be bowl shaped. The curved surface 264 may be formed of facets 265, which is illustrated in the example of Fig. 5. Put differently, the curved surface 264 may be formed of a plurality of flat surfaces. Thus, the curved surface 264 may be piecewise flat. The curved surface 264 may be a portion of a quasi-spherical surface comprising a plurality of facets or segments. Hence, the curved surface 264 may be a portion of a surface of a polyhedron. An example of such polyhedron may be a truncated icosahedron. The plurality of light sources 261 may be arranged on the facets 265. Each light source may be arranged such that the light source is configured to emit light in a direction substantially parallel to a normal of the associated facet. It is to be understood, similar to the example illustrated in Fig. 2, that Fig. 5 illustrates a cross section of the illumination system 260. Hence, the curved surface 264 of the illumination system 260 illustrated in Fig. 5 may be a quasi-cylindrical surface or a portion of a quasi-spherical surface. The curved surface 264 of the illumination system 260 of Fig. 5 may have a shape similar to a bowl. Hence, the facets 265 of Fig. 5 are illustrated with lines, and it is to be understood that each facet 265 may be a flat surface having at least three sides. For instance, the curved surface 264 may be formed of facets having five sides and facets having six sides (e.g., similar to an inner surface of a football or soccer ball). Even though that the curved surface 264 in Fig. 5 is illustrated as a continuous surface, it is to be understood that each facet may be separate. Hence, the curved surface may be formed by a plurality of parts, and each facet may be formed by one or more parts. It is further to be understood that each part may include one or more facets. Further, such parts may be arranged in contact with neighboring parts or may be arranged at a distance from neighboring parts. A single part may include all facets. It is further to be understood that the number facets 265 of the illumination system 260 of Fig. 5 is an example only, and other numbers of facets 265 may be used to form the curved surface 264 of the illumination system 260. It is furthermore to be understood that the number of light sources on each facet 265 is an example only, and that number may vary.

As is illustrated in Fig. 2, the microscope objective 280 is configured to image the sample 292 onto the image sensor 270. The image sensor 270 is configured to capture digital images of the sample 292. The microscope system 20 may comprise a plurality of microscope objectives. Hence, the microscope system 20 may comprise at least one microscope objective 280. This may allow the microscope system 20 to image the sample 292 using different microscope objectives. For example, the microscope system 20 may comprise a first microscope objective. A numerical aperture of the first microscope objective may be 0.4 or lower. Put differently, the first microscope objective may have a magnification of 20 times or lower. Hence, a larger portion of the sample 292 may be imaged at a time compared to a microscope objective having a relatively higher numerical aperture. This may, in turn, allow for a number of individual imaging positions needed to image a majority of the sample 292 to be reduced. Thereby, a time needed to image a majority of the sample 292 may be reduced. This may, in particular, be advantageous in case the machine learning model have been trained to construct a digital extended focus image having a relatively higher resolution than the digital images input to the machine learning model (i.e., the digital images of the input set). Hence, the sample 292 may be imaged more quickly, while the constructed digital extended focus image depicting the sample may have a resolution relatively higher than what the first microscope objective normally allows (e.g., when using bright-field illumination). The first microscope objective may be used to acquire the input set of digital images of the sample 292. The digital images captured using the first microscope objective may be used when training the machine learning model (i.e., the training set of digital images of the sample) and/or when acquiring the input set of digital images of the sample to be input into the machine learning model trained to construct the digital extended focus image depicting the sample. The microscope system 20 may further comprise a second microscope objective having a magnification of, e.g., 100 times and/or a numerical aperture of 1.25. The second microscope objective may be used to acquire digital images having higher resolutions than digital images acquired using the first microscope objective. Hence, the second microscope objective may be used to acquire the digital extended focus image of the ground truth which may be used during training the machine learning model. Put differently, digital images captured using the second microscope objective may be used to form the ground truth used when training the machine learning model. Alternatively, the digital extended focus image of the ground truth may be acquired using the first microscope objective, whereby the machine learning model may be trained to construct a digital extended focus image having a resolution which is similar (or identical) to the digital images of the training set of digital images. The digital extended focus image of the ground truth may be acquired using conventional microscopy illumination (e.g., bright-field illumination). Such conventional microscopy illumination may be produced by a conventional light source (not illustrated in Fig. 2). Alternatively, the illumination system 260 illustrated in Fig. 2 may be configured to illuminate the training sample with a bright-field illumination pattern. The bright-field illumination pattern may be formed by simultaneously illuminating the sample by a subset of the plurality of light sources 261. The bright-field illumination pattern may be formed by simultaneously illuminating the training sample by a majority (or all) of the plurality of light sources 261. In this context, the wording "bright-field illumination pattern" may refer to an illumination pattern that resembles the illumination used in bright-field microscopy where the training sample is imaged from one side and illuminated from an opposite side.

The microscope system 20 may further allow the relative position between the sample 292 and the microscope objective 280 to be altered in order to position the sample 292 at different focus positions. This may be achieved by moving the microscope objective 280 towards and/or away from the sample 292 along an optical axis of the microscope objective 280. Alternatively, or additionally, this may be achieved by moving the sample 292 (or the sample holder 290) towards and/or away from the microscope objective 280. The microscope objective 280 may be movable in a longitudinal direction Z by being coupled to a manual and/or motorized stage. The longitudinal direction Z may be parallel to an optical axis of the microscope system 20. Put differently, the microscope objective 280 may be movable in a focusing direction of the microscope system 20. Thus, the different focus positions of the sample 292 (or training sample) relative to the microscope objective 280 may be set by moving the microscope objective 280 along the longitudinal direction Z. The position of the microscope objective 280 along the longitudinal direction Z may be controlled by the circuitry 200. For example, the circuitry 200 may be configured to execute a focusing 2104 configured to adjust a position of the microscope objective 280 along the longitudinal direction Z. For instance, the focusing 2104 may be configured to control the motorized stage arranged to move the microscope objective 280. The focusing 2104 may be configured to automatically adjust the position of the microscope objective 280 along the longitudinal direction Z. Hence, the focusing 2104 may be an autofocus function.

It is to be understood that the numerical apertures and magnifications of the first microscope objective and/or the second microscope objective are examples only and may be chosen depending on, e.g., the type of the sample 292 and/or training sample. For example, the numerical aperture of the first microscope objective may have a magnification of 10 times and/or a numerical aperture of 0.25. Preferably, the numerical aperture of the second microscope objective may be 2 to 3 times higher than the numerical aperture of the first microscope objective. It is to be understood that this is an example only and the numerical aperture of the second microscope objective may be higher than 2 to 3 times higher than the numerical aperture of the first microscope objective. It is to be understood that the microscope system 20 may comprise further optics which may be used together with the microscope objective 280 to image the sample 292 onto the image sensor 270. For example, the microscope system 20 may, as illustrated in the example of Fig. 2, comprise at least one relay lens 285 arranged such that the sample 292 may be imaged onto the image sensor 270 by the microscope objective 280 and the at least one relay lens 285. It is further to be understood that the at least one relay lens 285 may be chosen (e.g., focal length, material, size, etc.) depending on the magnification and/or the numerical aperture of the microscope objective 280. Further, in case the microscope objective 280 comprises more than one microscope objective 280, each microscope objective may have a corresponding at least one relay lens.

The acquisition function 2100 is configured to acquire an input set of digital images by being configured to: control the illumination system 260 to illuminate the sample 292 with each illumination pattern of the plurality of illumination patterns. The plurality of illumination patterns used to acquire the input set of digital images may be formed in the same manner as the plurality of illumination patterns used to acquire the training set of digital images used to train the machine learning model. For example, the illumination patterns may have the same directions, same LED positions, same intensities, same colors, etc. The acquisition function 2100 is configured to acquire the input set of digital images by being further configured to: control the image sensor 270 to capture a digital image for each illumination pattern of the plurality of illumination patterns.

The digital extended focus image construction function 2102 is configured to input the input set of digital images into a machine learning model being trained as described in connection with Fig. 1 and Fig. 3.

The digital extended focus image construction function 2102 is further configured to receive, from the machine learning model, an output comprising the constructed digital extended focus image depicting the sample 292. Put differently, the digital extended focus image construction function 2102 may be configured to construct the digital extended focus image depicting the sample 292 by inputting the input set of digital images into the trained machine learning model (e.g., trained in the manner described in connection with Fig. 1 and Fig. 3), and receiving, from the trained machine learning model, an output comprising the digital extended focus image depicting the sample 292.

It is to be understood that, even though the construction of the digital extended focus image depicting a sample is described in connection with the microscope system of Fig. 2, the construction of the digital extended focus image may be implemented in a separate computing device. Hence, the separate computing device may be configured to receive the input set of digital images, and to input the received input set of digital images into a machine learning model trained according to the above. The machine learning model may be stored and executed on the computing device. The input set of digital images may, e.g., be captured using the microscope system 20 of Fig. 2, and sent to the separate computing device (i.e., the computing device may be configured to receive the input set of digital images from the microscope system 20).

In the above, the device 10 and the microscope system 20 have been discussed as being separate. However, it is to be understood that the microscope system 20 may comprise the functionality of the device 10. In such case, the functions performed by the circuitry 100 illustrated in Fig. 1 may be performed by the circuitry 200 illustrated in Fig. 2.

Figure 3 is a box scheme of a method 30 for training a machine learning model to construct a digital extended focus image depicting a sample. The method comprising: acquiring S300, using at least one microscope objective, a training set of digital images of a training sample by: illuminating S302, using an illumination system, the training sample with a plurality of illumination patterns, and capturing S304, for each illumination pattern of the plurality of illumination patterns, a digital image of the training sample; acquiring S306, using the at least one microscope objective, a digital extended focus image of the training sample; forming S308 a ground truth comprising the digital extended focus image depicting the training sample; and training S310 the machine learning model to construct the digital extended focus image depicting a sample using the training set of digital images and the ground truth.

The at least one microscope objective may comprise a first microscope objective and a second microscope objective, wherein the second microscope objective may have a higher numerical aperture than the first microscope objective. The training set of digital images may be acquired S300 using the first microscope objective and the digital extended focus image of the ground truth may be acquired S306 using the second microscope objective, whereby a resolution of the digital extended focus image of the ground truth may be higher than a resolution of a digital image of the training set of digital images.

Acquiring S306 the digital extended focus image of the ground truth may comprise: positioning S312 the at least one microscope objective at a plurality of focus positions relative to the training sample, wherein at each focus position, a corresponding layer of the training sample may be between a near limit and a far limit of a depth of field of the at least one microscope objective; and capturing S314, for each focus position of the plurality of focus positions, a digital image of the training sample, thereby forming a stack of digital images; and combining S316 in-focus parts of each digital image of the stack of digital images, thereby forming the digital extended focus image of the ground truth.

The plurality of focus positions may correspond to a plurality of positions in the training sample extending over a thickness of the training sample.

Acquiring S300 the training set of digital images may further comprise: positioning S318 the training sample at a focus position relative to the at least one microscope objective, such that a layer of the training sample is in focus, wherein the layer may have a thickness smaller than a thickness of the training sample.

The illumination system may comprise a plurality of light sources, each light source of the plurality of light sources may be configured to illuminate the sample from one direction of a plurality of directions; and wherein each illumination pattern of the plurality of illumination patterns may be formed by one or more light sources of the plurality of light sources.

At least one direction of the plurality of directions may correspond to an angle larger than a numerical aperture of the at least one microscope objective used to acquire the training set of digital images.

Figure 4 is a box scheme of a method 40 for constructing a digital extended focus image depicting a sample. The method 40 comprising: acquiring S400, using a microscope objective 280, an input set of digital images of the sample by: illuminating S402, using an illumination system 260, the sample 292 with a plurality of illumination patterns, and capturing S404, for each illumination pattern of the plurality of illumination patterns, a digital image of the sample 292; and constructing S406 the digital extended focus image depicting the sample 292 by: inputting S408 the input set of digital images into a machine learning model being trained according to the method 30 discussed in connection with one or more of Fig. 1, Fig. 2, and Fig. 3, and receiving S410, from the machine learning model, an output comprising the constructed digital extended focus image depicting the sample 292. The plurality of illumination patterns used to acquire the input set of digital images may be formed in the same manner as the plurality of illumination patterns used to acquire the training set of digital images used to train the machine learning model. For example, the illumination patterns may have the same directions, same LED positions, same intensities, same colors, etc.

The illumination system 260 may comprise a plurality of light sources 261, each light source of the plurality of light sources 261 may be configured to illuminate the sample 292 from one direction of a plurality of directions 262, and wherein each illumination pattern of the plurality of illumination patterns may be formed by one or more light sources of the plurality of light sources 261.

At least one direction of the plurality of directions 262 may correspond to an angle larger than a numerical aperture 282 of the microscope objective 280 used to acquire the input set of digital images.

A skilled person would be aware of machine learning, and in particular as to how a machine learning model may be trained and/or how a trained machine learning model may be used. However, in brief, the machine learning model may be a type of supervised machine learning model, for example a network such as U-net or Pix2pix. The machine learning model may be a transformer-based network such as Swin!R. The machine learning model may be a convolutional neural network. The machine learning model may be trained to predict a desired output using example input training data and a ground truth, i.e. the "correct" or "true" output. Put differently, the ground truth may be used as a label for the input training data. The input training data may comprise data pertaining to different outcomes, and each input training data may thereby be associated with a ground truth associated with that particular input training data. Hence, each input training data may be labelled with an associated ground truth (i.e., "correct" or "true" output). The machine learning model may comprise a plurality of layers of neurons, and each neuron may represent a mathematical operation which is applied to the input training data. Typically, the machine learning model comprises an input layer, one or more hidden layers, and an output layer. The first layer may be referred to as the input layer. The output of each layer (except the output layer) in the machine learning model may be fed to a subsequent layer, which in turn produces a new output. The new output may be fed to a further subsequent layer. The output of the machine learning model may be an output of the output layer. The process may be repeated for all layers in the machine learning model. Typically, each layer further comprises an activation function. The activation function may further define the output of a neuron of the layer. For example, the activation function may ensure that the output from a layer is not too large or too small (e.g., tending towards positive or negative infinity). Further, the activation function may introduce non-linearity into the machine learning model. During the training process, weights and/or biases associated with the neurons of the layers may be adjusted until the machine learning model produces predictions for the input training data that reflect the ground truth. Each neuron may be configured to multiply the input to the neuron with a weight associated with that neuron. Each neuron may be further configured to add a bias associated with that neuron to the input. Put differently, an output from a neuron may be a sum of the bias associated with the neuron and a product of the weight associated with the neuron and the input. The weights and biases may be adjusted in a recursive process and/or an iterative process. This may be known as backpropagation within the art. A convolutional neural network may be a type of neural network comprising one or more layers that represents a convolution operation. In this context, the input training data comprises digital images. A digital image may be represented as matrix (or as an array), and each element in the matrix (or array) may represent a corresponding pixel of the digital image. The value of an element may thereby represent a pixel value and/or color value of the corresponding pixel in the digital image. Hence, the input and output to the machine learning model may be numerical (e.g., a matrix or an array) representing digital images. In this context, the input is a set of digital images (i.e., the training set or the input set). Thus, the input to the machine learning model may be a plurality of matrices, or a three-dimensional matrix. It is, however, to be understood that the machine learning model may take further input during training. In this specific case, the machine learning model is trained using a training set of digital images and a ground truth. The first training set of digital images is acquired in a manner similar to the acquisition of the first input set of digital images. Put differently, the illumination patterns used when acquiring the training set of digital images and the input set of digital images may be similar or identical. The machine learning model may be trained using the training set of digital images as input and the ground truth as the desired output. Put differently, the machine learning model may be trained until a difference between an output of the machine learning model and the ground truth is smaller than a threshold. This difference may within the art be described by a loss function. It may be preferred to train the machine learning model until the loss function is minimized. Put differently, the machine learning model may be trained until the difference between the output of the machine learning model and the ground truth is minimized. The training process may be repeated for a plurality of different training samples (e.g., different training samples of the same and/or of different types), which may allow for the machine learning model to construct digital images of a wider range of sample types and/or with higher accuracy.

The person skilled in the art realizes that the present inventive concept by no means is limited to the preferred variants described above. On the contrary, many modifications and variations are possible within the scope of the appended claims.

For example, a variant of the present inventive concept may be a method for training machine learning model to construct a digital extended focus image depicting a sample, the method comprising: receiving a training set of digital images of a training sample, wherein the training set is acquired using at least one microscope objective and by: illuminating, using an illumination system, the training sample with a plurality of illumination patterns, and capturing, for each illumination pattern of the plurality of illumination patterns, a digital image of the training sample; receiving a digital extended focus image of the training sample, wherein the digital extended focus image is acquired using the at least one microscope objective; forming a ground truth comprising the digital extended focus image depicting the training sample; and training the machine learning model to construct the digital extended focus image depicting a sample using the training set of digital images and the ground truth. Put differently, training the machine learning model may be performed separately (e.g., in time and/or location) from the acquisition of the training set of digital images and the digital extended focus image. This variant of the method may be suited to implement in software. For instance, it may be implemented on a non-transitory computer-readable storage medium having stored thereon program code portions which, when executed on a device having processing capabilities performs the method according to this variant. A skilled person realizes that the above-mentioned features and/or advantages described above, when applicable, apply to this variant as well. In order to avoid undue repetition, reference is made to the above.

Additionally, variations to the disclosed variants can be understood and effected by the skilled person in practicing the claimed invention, from a study of the drawings, the disclosure, and the appended claims.

## Claims

1. A method (30) for training a machine learning model to construct a digital extended focus image depicting a sample, the method comprising:
acquiring (S300), using at least one microscope objective, a training set of digital images of a training sample by:
illuminating (S302), using an illumination system, the training sample with a plurality of illumination patterns, and
capturing (S304), for each illumination pattern of the plurality of illumination patterns, a digital image of the training sample;
acquiring (S306), using the at least one microscope objective, a digital extended focus image of the training sample;
forming (S308) a ground truth comprising the digital extended focus image depicting the training sample; and
training (S310) the machine learning model to construct the digital extended focus image depicting a sample using the training set of digital images and the ground truth.

2. The method (30) according to claim 1, wherein the at least one microscope objective comprises a first microscope objective and a second microscope objective, wherein the second microscope objective has a higher numerical aperture than the first microscope objective; and
wherein the training set of digital images is acquired (S300) using the first microscope objective and the digital extended focus image of the ground truth is acquired (S306) using the second microscope objective, whereby a resolution of the digital extended focus image of the ground truth is higher than a resolution of a digital image of the training set of digital images.

3. The method according to claim 1 or 2, wherein acquiring (S306) the digital extended focus image of the ground truth comprises:
positioning (S312) the at least one microscope objective at a plurality of focus positions relative to the training sample, wherein at each focus position, a corresponding layer of the training sample is between a near limit and a far limit of a depth of field of the at least one microscope objective; and
capturing (S314), for each focus position of the plurality of focus positions, a digital image of the training sample, thereby forming a stack of digital images; and
combining (S316) in-focus parts of each digital image of the stack of digital images, thereby forming the digital extended focus image of the ground truth.

4. The method (30) according to claim 3, wherein the plurality of focus positions corresponds to a plurality of layers in the training sample extending over a thickness of the training sample.

5. The method (30) according to any one of claims 1 - 4, wherein acquiring (S300) the training set of digital images further comprises:
positioning (S318) the training sample at a focus position relative to the at least one microscope objective, such that a layer of the training sample is in focus, wherein the layer has a thickness smaller than a thickness of the training sample.

6. The method (30) according to any of the claims 1 - 5 , wherein the illumination system comprises a plurality of light sources, each light source of the plurality of light sources being configured to illuminate the sample from one direction of a plurality of directions; and
wherein each illumination pattern of the plurality of illumination patterns is formed by one or more light sources of the plurality of light sources.

7. The method (30) according to claim 6, wherein at least one direction of the plurality of directions corresponds to an angle larger than a numerical aperture of the at least one microscope objective used to acquire the training set of digital images.

8. A method (40) for constructing a digital extended focus image depicting a sample (292), the method (40) comprising:
acquiring (S400), using a microscope objective (280), an input set of digital images of the sample (292) by:
illuminating (S402), using an illumination system (260), the sample (292) with a plurality of illumination patterns, and
capturing (S404), for each illumination pattern of the plurality of illumination patterns, a digital image of the sample (292); and
constructing (S406) the digital extended focus image depicting the sample (292) by:
inputting (S408) the input set of digital images into a machine learning model being trained according to the method of any one of claims 1 - 7, and
receiving (S410), from the machine learning model, an output comprising the constructed digital extended focus image depicting the sample (292).

9. The method (40) according to claim 8, wherein the illumination system (260) comprises a plurality of light sources (261), each light source of the plurality of light sources (261) being configured to illuminate the sample (292) from one direction of a plurality of directions (262), and wherein each illumination pattern of the plurality of illumination patterns is formed by one or more light sources of the plurality of light sources (261).

10. The method (40) according to claim 9, wherein at least one direction of the plurality of directions (262) corresponds to an angle larger than a numerical aperture (282) of the microscope objective (280) used to acquire (S400) the input set of digital images.

11. A device (10) for training a machine learning model to construct a digital extended focus image depicting a sample, the device (10) comprising:
circuitry (100) configured to execute:
a first receiving function (1100) configured to receive a training set of digital images of a training sample, wherein the training set of digital images is acquired, using at least one microscope objective, by:
illuminating, using an illumination system, the training sample with a plurality of illumination patterns, and
capturing, for each illumination pattern of the plurality of illumination patterns, a digital image of the training sample;
a second receiving function (1102) configured to receive a ground truth comprising a digital extended focus image depicting the training sample, wherein the digital extended focus image is acquired using the at least one microscope objective; and
a training function (1104) configured to train the machine learning model to construct the digital extended focus image depicting a sample using the training set of digital images and the ground truth.

12. A microscope system (20) comprising:
an illumination system (260) configured to illuminate a sample (292) with a plurality of illumination patterns;
an image sensor (270) configured to capture digital images of the sample (292);
a microscope objective (280) configured to image the sample (292) onto the image sensor (270); and
circuitry (200) configured to execute:
an acquisition function (2100) configured to acquire an input set of digital images by being configured to:
control the illumination system (260) to illuminate the sample (292) with each illumination pattern of the plurality of illumination patterns, and
control the image sensor (270) to capture a digital image for each illumination pattern of the plurality of illumination patterns; and
wherein the circuitry (200) is further configured to execute:
a digital extended focus image construction function (2102) configured to:
input the input set of digital images into a machine learning model being trained according to the method of any one of claims 1 - 7, and
receive, from the machine learning model, an output comprising the constructed digital extended focus image depicting the sample (292).

13. The microscope system (20) according to claim 12, wherein the illumination system (260) comprises a plurality of light sources (261), each light source of the plurality of light sources (261) being configured to illuminate the sample (292) from one direction of a plurality of directions (262), and wherein each illumination pattern of the plurality of illumination patterns is formed by one or more light sources of the plurality of light sources (261).

14. The microscope system (20) according to claim 13, wherein at least one direction of the plurality of directions (262) corresponds to an angle larger than a numerical aperture (282) of the microscope objective (280) used to image the sample (292).

15. The microscope system (20) according to claim 13 or 14, wherein the plurality of light sources (261) is arranged on a curved surface (264) being concave along at least one direction along the surface (264).
